(19) Europäisches Patentamt / European Patent Office / Office européen des brevets

(11) **EP 2 843 063 B1**

(12) **EUROPÄISCHE PATENTSCHRIFT**

(45) Veröffentlichungstag und Bekanntmachung des Hinweises auf die Patenterteilung:
**13.07.2016   Patentblatt 2016/28**

(51) Int Cl.:
***C22B 7/04*** (2006.01)

(21) Anmeldenummer: **13182576.2**

(22) Anmeldetag: **02.09.2013**

(54) **Verfahren zur Aufbereitung von Stahlwerkschlacken sowie hydraulisches mineralisches Bindemittel**

A method for treating a steel slag and a hydraulic mineral binder

Procédé de traitement de scories d'acier et de liant minéral hydraulique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.03.2015   Patentblatt 2015/10**

(73) Patentinhaber: **Loesche GmbH**
**40549 Düsseldorf (DE)**

(72) Erfinder:
• **Wulfert, Holger**
  **40549 Düsseldorf (DE)**

• **Ludwig, Horst Michael**
  **40549 Düsseldorf (DE)**

(74) Vertreter: **Heim, Florian Andreas et al**
**Weber & Heim**
**Patentanwälte**
**Partnerschaftsgesellschaft mbB**
**Irmgardstraße 3**
**81479 München (DE)**

(56) Entgegenhaltungen:
GB-A- 1 556 833      JP-A- S51 122 670
JP-A- 2012 001 797    US-A1- 2012 073 406

EP 2 843 063 B1

**Beschreibung**

Die Erfindung betrifft ein Verfahren zur Aufbereitung von Stahlwerkschlacken zum Herstellen eines hydraulischen mineralischen Bindemittels mit hohem Erhärtungspotential und zum Rückgewinnen von Eisen gemäß dem Patentanspruch 1.

Stahlwerkschlacken, welche auch als LD-Schlacken, LDS, Elektroofen-Schlacken, EOS oder SWS bezeichnet werden, können verfahrensbedingt noch sehr große Mengen an Eisen enthalten, welches zum Teil in metallischer Form, jedoch hauptsächlich in Form von Oxiden mineralisch gebunden in der Schlacke vorhanden ist. Diese in der Schlacke vorliegenden Eisenoxide können nicht auf einem rein mechanischen Weg zurückgewonnen werden, da sie fest in der Schlackenmatrix eingebunden sind und zunächst durch eine thermochemische Reduktion in die elementare metallische Form überführt werden müssen. Die Schlackenmatrix besteht hauptsächlich aus den typischen Oxiden Calciumoxid, Siliziumdioxid und Aluminiumoxid. Im Gegensatz zu anderen Schlackenformen, wie beispielsweise der Hochofenschlacke, treten sie allerdings nicht in hydraulisch aktiven Phasen auf und sind daher nicht für eine hochwertige Verwertung im Zement geeignet. Daher werden sie fast ausschließlich als Stückschlacke, das heißt Splitt, im Straßen- und Wegebau verwendet.

Aus der EP 1 370 501 B1 ist beispielsweise ein Verfahren zur Behandlung von Stahlschlacke bekannt, um der Schlacke die Eigenschaften eines hydraulischen Bindemittels zu verleihen. Das entstehende Produkt wird als wenigstens äquivalent zu Portlandzementklinker bezeichnet. Dabei wird die Stahlschlacke, welche bezogen auf das Gesamtgewicht der Schlacke wenigstens 45 M.-% Calciumoxid und weniger als 30 M.-% $Fe_2O_3$ enthält, durch Oxidation mit Sauerstoff oder Luft unter einem Druck von 1 bis 15 bar bei einer Temperatur von 1.650 °C bis 1.400 °C behandelt. Zu dieser Schlacke wird eine Kalkquelle zugegeben, welche gegebenenfalls mit einer Siliziumdioxidquelle oder einer Aluminiumoxidquelle ergänzt ist. Die Anteile der Kalkquelle und gegebenenfalls der Siliziumdioxid- oder Aluminiumoxidquelle sind so gewählt, dass die Schlacke nach der Umwandlung und bei Umgebungstemperatur einen $Fe_2O_3$-Gehalt von wenigstens 13 M.-% und eine mineralogische Zusammensetzung aufweist, die wenigstens 40 M.-% der mineralogischen Phase oder Mineralphase $C_3S$ und mehr als 10 M.-% Calciumchlorid/-fluorid in Form der mineralogischen Phasen $C_2F$ oder $C_4AF$ enthält.

Nachteilig an diesem Verfahren ist, dass das in der Schlacke vorhandene Eisen nicht rückgewonnen wird und zur Stabilisierung des entstandenen $C_3S$ aufwendige Kühlmaßnahmen notwendig sind.

Ein anderes Verfahren zur Aufbereitung von Stahlwerksschlacken ist in der EP 1 697 271 B1 beschrieben. Hierbei soll ein hydraulisches Bindemittel hergestellt werden, welches mindestens 25 M.-% Calcium- und Magnesiumalumosilicate, mindestens 5 M.-% mineralische Oxide und/oder Halogenide sowie maximal 31 M.-% Aluminiumoxid, maximal 10 M.-% Calciumalumoferrit und maximal 0,01 M.-% Kohlenstoff aufweist. Um dieses Produkt zu erhalten, sollen Ausgangsstoffe, zu welchen auch Stahlwerksschlacken zählen, in entsprechenden Mengen in einer reduzierenden Atmosphäre geschmolzen werden. Das so entstandene Produkt soll isoliert werden. Dies kann sowohl mittels einer schnellen Abkühlung, beispielsweise mit Wasser oder Luft, sowie auch mittels einer langsamen Abkühlung erfolgen.

Unabhängig von der Art der Abkühlung werden wohl keine nennenswerten Mengen der Hauptklinkerphase Alit ausgebildet. Ob und wie möglicherweise hierbei entstandenes elementares Eisen abgetrennt wird, ist nicht beschrieben.

In der WO 96/24696 wird ein Verfahren zur Herstellung von Roheisen und Zementklinker aus eisenoxidhaltigen Schlacken vorgeschlagen. Hierbei kann es sich beispielsweise um Stahlwerksschlacken handeln. Es ist vorgesehen, den Schlacken zusätzlich Eisenoxidträger wie Eisenerze oder Zunder sowie Kalk zuzugeben und die daraus gebildete Ferritschlacke durch Zugabe von Kohlenstoff zu reduzieren, wobei eine Eisenphase und eine Sinterphase ausgebildet werden. Die Sinterphase wird in einer oxidierenden Umgebung nachgesintert und anschließend als Klinker ausgebracht. Klinkerphasen werden somit unter oxidierenden Bedingungen ähnlich der konventionellen Klinkerherstellung im Drehrohrofen erzeugt.

Die GB 1 556 833 A1 betrifft ein Verfahren zum Reduzieren von Schlacken. Durch Zugabe entsprechender Additive und anschließendem Sintern soll Portlandzementklinker hergestellt werden.

Die JP 2011001797 sowie die JPS 51122670 A1 offenbaren ein Verfahren zum Reduzieren von Stahlwerksschlacken, um diese Schlacke als Zuschlagstoff für die Herstellung von Zement weiter zu verwenden.

Der Erfindung liegt daher die **Aufgabe** zugrunde ein Verfahren zur Aufbereitung von Stahlwerkschlacken anzugeben, bei dem sowohl ein hydraulisches mineralisches Bindemittel mit hohem Erhärtungspotential hergestellt sowie Eisen rückgewonnen werden kann. Des Weiteren liegt der Erfindung die Aufgabe zugrunde, ein hydraulisches mineralisches Bindemittel mit hohem Erhärtungspotential bereitzustellen, welches bevorzugt in erster Linie auf der Ausbildung einer reaktiven Alit-Phase basiert.

Diese Aufgabe wird erfindungsgemäß durch ein Verfahren zur Aufbereitung von Stahlwerkschlacken mit den Merkmalen des Anspruch 1 gelöst.

Vorteilhafte Ausführungsformen der Erfindung sind in den Unteransprüchen und der Beschreibung angegeben.

Bei dem erfindungsgemäßen Verfahren ist zuerst vorgesehen, ein Aufgabeprodukt bereitzustellen, welches Stahlwerkschlacke mit Eisenverbindungen, insbesondere in oxydischer Form, und MnO aufweist, wobei das MnO in der Stahlwerkschlacke enthalten sein kann. Dieses Aufgabeprodukt wird als Schmelze, bevorzugt in einem Ofen, weiterverarbeitet, indem Reduktionsmittel in die Schmelze zum Reduzieren der Eisenverbindungen eingebracht werden, um im mineralischen Schmelzanteil einen Kalkstandard zwischen 90 und 110 zu erreichen, wobei das Einbringen des Reduktionsmittels in einer nicht-oxidierenden Atmosphäre durchgeführt wird. Es herrschen also nicht-oxidierende Bedingungen in der Atmosphäre des Ofens. Anschließend wird die Schmelze definiert abgekühlt, wobei die Schmelze spätestens nach 15 min erstarrt. Dann wird zumindest ein Teil des elementaren Eisens aus der erstarrten Schmelze mechanisch abgetrennt. Anschließend wird die erstarrte Schmelze, welche einen verminderten Eisengehalt aufweist, einer Verwendung als hydraulisches mineralisches Bindemittel zugeführt.

Im Sinne der Erfindung wird unter Aufgabeprodukt die Stahlwerkschlacke sowie, falls notwendig, weitere Korrekturkomponenten wie MnO oder $SiO_2$, verstanden. Hierbei kann auch bereits ausreichend MnO in der Schlacke vorhanden sein, so dass MnO nicht als Korrekturkomponenten hinzugegeben werden muss. Dies ist zumindest bei einigen untersuchten Stahlwerksschlacken der Fall. Die Eisenverbindungen liegen meist in der Stahlwerkschlacke als Eisenhalogenide, Eisensulfide, Eisenselenide sowie insbesondere Eisenoxide, wie FeO, $Fe_2O_3$ oder $Fe_3O_4$, vor.

Das Aufgabeprodukt kann in geeigneten Behältnissen entweder zur Schmelze erhitzt oder auch in schmelzflüssigem Zustand extern bereitgestellt werden. Zum Aufschmelzen des Aufgabeproduktes oder zum weiteren Erhitzen der Schmelze kann beispielsweise ein Lichtbogenofen, insbesondere in einer dreiphasigen geschlossenen Form, verwendet werden.

Durch das Einbringen der Reduktionsmittel werden die Eisenverbindungen in die elementare metallische Form überführt. Hierdurch wird im mineralischen Schmelzanteil ein Kalkstandard in einem Bereich zwischen 90 und 110, bevorzugt zwischen 95 und 105, erreicht. Unter mineralischem Schmelzanteil kann hierbei die Schmelze abzüglich des elementaren Eisens verstanden werden. Der Kalkstandard (KSt) gibt den im Rohstoff oder Klinker tatsächlich vorhandenen CaO-Gehalt in Prozentanteilen desjenigen CaO-Gehalts an, der unter technischen Brenn- und Kühlbedingungen im Höchstfall an $SiO_2$, $Al_2O_3$ und $Fe_2O_3$ gebunden werden kann. Er ist über die Gleichung

$$KSt = \frac{100 \cdot CaO}{2{,}80 \cdot SiO_2 + 1{,}1 \cdot Al_2O_3 + 0{,}7 \cdot Fe_2O_3}$$

definiert.

Das Durchführen der Reduktion in einer nicht-oxidierenden Atmosphäre verhindert die Rückoxidation des bereits reduzierten Eisens und erhöht damit die Ausbeute an elementarem Eisen. Dies trägt wieder zum Erreichen des Kalkstandards bei.

Ein großer Teil des Eisens setzt sich aufgrund der größeren Dichte gegenüber der restlichen Schlacke im unteren Bereich des Schmelzgefäßes ab. Ein anderer Teil bleibt in Form von Tröpfchen und Einschlüssen in der erkalteten Schlacke zurück. Der große Teil des entstandenen Fe kann aus dem Gefäß abgezogen werden. Dies kann im schmelzflüssigen Zustand ähnlich einem Abstich oder im erstarrten Zustand ähnlich einer Ofensau erfolgen.

Nach dem Erstarren der Schmelze kann ein Teil des elementaren Eisens mechanisch abgetrennt und einer weiteren Verwertung zugeführt werden

Die Schlacke mit dem verminderten Eisengehalt kann als hydraulisches mineralisches Bindemittel verwendet werden. Dieses Bindemittel wird im Weiteren als LDS-Bindemittel bezeichnet.

Mit dem erfindungsgemäßen Verfahren kann auf einfache und effiziente Weise ein hoher Anteil von elementarem Eisen aus Stahlwerkschlacken zurückgewonnen werden und ferner ein äußerst reaktives hydraulisches mineralisches Bindemittel erhalten werden, welches hervorragend als Kompositmaterial für hochwertige Bindemittel oder als eigenständiges Klinkermaterial geeignet ist. Dieses LDS-Bindemittel zeichnet sich durch eine sehr hohe Reaktivität und Erhärtungsfähigkeit aus. Es weist einen Alit-Anteil ($C_3S$) von mindestens 40 M.-% bei einem Anteil von mindestens 60 M.- % kristalliner Phasen auf. Die kristallinen Phasen bestehen größten Teils aus Alit und Belit ($C_2S$) und können sogar zwischen 80 M.-% und 90 M.-% betragen.

Der Erfindung liegen im Wesentlichen drei miteinander wechselwirkende Grundideen zugrunde: Erstens das Vorsehen von MnO in der Schmelze, zweitens das Reduzieren des Eisens, bis im mineralischen Schmelzanteil der angegebene Kalkstandard erreicht wird, und drittens das schnelle definierte Abkühlen.

Der definierte Abkühlprozess bewirkt die Bildung eines sehr großen Anteils an kristallinen Phasen mit hohem Alit-Anteil.

Die besonders hohe Reaktivität der erhaltenen Alit-Phase wird auf die Anwesenheit von $Mn^{2+}$-Ionen zurückgeführt, welche in die Gitterstruktur der Alit-Phase eingebaut werden und diese stören, so dass das Erhärtungspotential des LDS-Bindemittels, welches insbesondere auf die Alit-Phase zurückzuführen ist, erheblich gesteigert wird.

Bei der erfindungsgemäßen Verarbeitung der Schmelze unter reduzierenden Bedingungen liegt das Mn in seiner 2-wertigen Form als $Mn^{2+}$ vor. Dadurch wird ein Einbau in das Gitter des Alits möglich, wobei Ca im Gitter ersetzt wird. Es werden hierbei Einbauraten bis 2% erreicht.

Dies ist bei der herkömmlichen Zementklinkerherstellung nicht möglich. Sofern im Zementrohstoff Mn-Verbindungen vorhanden sind, wird das Mn durch den oxidativen Prozess bei der Zementklinkerherstellung als $Mn^{3+}$ vorliegen. Dadurch wird das $Mn^{3+}$ tendenziell auf die Gitterplätze des Fe im $C_4AF$ eingebaut wird. Ein Einbau von $Mn^{3+}$ auf die Ca-Gitterplätze des Alits oder des Belits ist nicht möglich.

Folglich ist eine vergleichbare Reaktivitätssteigerung des Alits bei herkömmlicher Zementklinkerherstellung unter oxidierender Atmosphäre nicht möglich, da das Mangan, wenn vorhanden, als $Mn^{3+}$ vorliegt. Gleiches gilt auch für alle Verfahren zur Behandlung von Stahlwerksschlacken, die unter oxidierenden Bedingungen durchgeführt werden.

Neben der Reaktivitätssteigerung ist der Manganeinbau in die Alit-Phase in der Lage diese Phase zu stabilisieren und den Zerfall in Belit und Freikalk unabhängig von den gewählten Kühlbedingungen zu verhindert.

Schlussendlich spielt auch noch der geforderte Kalkstandard eine entscheidende Rolle für den hohen Anteil an kristallinen Phasen mit hohem Alitanteil und die hohe Reaktivität des erfindungsgemäßen LDS-Bindemittels.

Grundsätzlich kann eine beliebige Menge an MnO im Aufgabeprodukt vorhanden sein. Vorteilhaft ist aber, wenn das Aufgabeprodukt 0,1 M.-% bis 10 M.-%, insbesondere 0,5 M.-% bis 5 M.-% MnO aufweist. Bei diesem Gehalt an Manganoxid ist gewährleistet, dass eine signifikante Menge an $Mn^{2+}$-Ionen in das Kristallgitter der Alit-Phase eingebaut wird und dadurch die Kristallstruktur stört.

Es ist vorteilhaft, wenn in dem Aufgabeprodukt bis zu 5 M.-% $Al_2O_3$ und/oder 30 bis 50 M.-% CaO und/oder 10 bis 20 M.-% $SiO_2$ enthalten sind. Noch vorteilhafter enthält das Aufgabeprodukt 3 bis 5 M.-% $Al_2O_3$ und/oder 35 bis 45 M.-% CaO und/oder 15 bis 20 M.-% $SiO_2$.

Bei diesen Phasenzusammensetzungen wird die Bildung der Alit-Phase und weiterer kristalliner Phasen unter thermochemischen Gesichtspunkten begünstigt. Ferner wird in diesen Konzentrationsbereichen der beteiligten Oxide mit hoher Wahrscheinlichkeit ein Kalkstandard zwischen 90 und 110, beziehungsweise noch bevorzugter zwischen 95 und 105, erreicht. Sollte die genannte Zusammensetzung nicht bereits in dem angelieferten Stahlwerkschlackenmaterial enthalten sein, so können die im Unterschuss vorliegenden Oxide gegebenenfalls vor oder während des Schmelzprozesses hinzugefügt werden.

Vorteilhafterweise hat die Schmelze vor und/oder während der Reduktion eine Temperatur von etwa 1.450 °C bis etwa 1.800 °C, insbesondere von 1.550 °C bis 1.750 °C, bevorzugt nicht mehr als 1650 °C. In diesem Temperaturbereich sind sämtliche Komponenten des Aufgabeproduktes, insbesondere die oxidischen Anteile, vollständig aufgeschmolzen und die Reduktionsreaktion weist eine ausreichend hohe Geschwindigkeit auf, um auch unter energetischen und thermochemischen Gesichtspunkten einen raschen Ablauf des Reduktionsprozesses zu gewährleisten.

Die nicht-oxidierende Atmosphäre kann eine reduzierende Atmosphäre sein. Dadurch wird der Reduktionsprozess, welcher hauptsächlich durch die zugeführten Reduktionsmittel in fester Form stattfindet, weiter unterstützt.

Es ist bevorzugt, wenn als Reduktionsmittel Kohlenstoff, Silizium und/oder andere Metalle oder Halbmetalle verwendet werden. Als Kohlenstoffmodifikation eignet sich insbesondere Petrolkoks, da es eine sehr hohe spezifische Oberfläche und dementsprechend eine hohe Reaktivität aufweist. Silizium, Calcium und Aluminium haben ferner den Vorteil, dass die Oxide Bestandteile der Schlacke bilden können.

Zumindest ein Teil des Reduktionsmittels kann in die Schmelze eingeblasen werden, beispielsweise mittels eines Schutzgasstroms. Zum Einblasen des Reduktionsmittels in die Schmelze eignen sich bei Verwendung eines Lichtbogenofens insbesondere Hohlelektroden. Neben einer besonders effizienten Verteilung des Reduktionsmittels in der Schmelze wird durch das Einblasen ein weiterer Beitrag zur Durchmischung selbiger erreicht. Durch die Verwendung eines Schutzgases wird vermieden, dass unerwünschte Nebenreaktionen, insbesondere Oxidationen des Reduktionsmittels sowie der in der Schmelze enthaltenen oxidischen Komponenten stattfinden. Als Schutzgas eignet sich beispielsweise Argon. Es können aber auch andere Verfahren verwendet werden, um die Reduktionsmittel in die schmelzflüssige Schlacke einzubringen beziehungsweise einzublasen. Gegebenenfalls kann ein anderer Teil des Reduktionsmittels mit der Aufgabeschlacke bereits vorab in einem bestimmten Verhältnis gemischt werden. Dies bietet sich insbesondere beim erneuten Aufschmelzen der Schlacke an. Energetisch günstiger, ist aber die bereits schmelzflüssige Schlacke aus einem vorgeschalteten Prozess zu übernehmen. Hierbei kann es bevorzugt sein die gesamten Reduktionsmittel einzublasen.

Bei der Verwendung von Kohlenstoff als Reduktionsmittel kann bei der Reduktion der Oxide als Nebenprodukt Kohlenmonoxid und Kohlendioxid entstehen. Diese Gase entweichen aus der Schmelze, was zum Schäumen dieser führen kann. Um das Schäumen zu verringern, kann es vorteilhaft sein ein Flussmittel, zum Beispiel Bor in oxidischer Form wie Borax, in die Schmelze einzubringen.

In einer bevorzugten Ausführungsform des erfindungsgemäßen Verfahrens wird nach dem Reduzieren und vor dem Erstarren der Schmelze flüssiges elementares Eisen abgetrennt. Da flüssiges elementares Eisen eine höhere Dichte aufweist als die Schmelzphase, sammelt es sich am Boden des Schmelzofens an und kann von dort relativ einfach abgezogen werden. Unter Schmelzofen oder Schmelzaggregat kann im Rahmen der Erfindung ein Behälter zum Aufnehmen der Schmelzphase verstanden werden, der es ermöglicht, durch zusätzlichen Energieeintrag die Schmelze im flüssigen Zustand zu halten, beispielsweise ein Lichtbogenofen.

Grundsätzlich wird die Schmelze derart abgekühlt, dass sie vor Erreichen der 15 Minutengrenze erstarrt ist.

Wesentlich ist hierbei, dass sie unter die Transformationstemperatur, welche bei etwa 850 °C liegt, abgekühlt wird.

Für die Abkühlung der Schmelze können verschiedene Verfahren eingesetzt werden. Wesentlich ist hierbei, dass die gewünschte maximale Abkühlzeit eingehalten wird. Beispielsweise ist es möglich, eine Einrichtung ähnlich wie bei der konventionellen Klinkerkühlung, zum Beispiel Rostkühler oder auch wie bei der Herstellung von Weisszementklinker (Wasserkühlung) einzusetzen, welche die Schmelze derart schnell abkühlt, dass sie in weniger als 15 Minuten, beispielsweise zwischen 10 Minuten und 15 Minuten oder zwischen 7 Minuten und 9 Minuten, erstarrt ist.

Soll die Schmelze noch schneller abgekühlt werden, so dass sie beispielsweise nach drei oder weniger Minuten erstarrt, bieten sich Abkühlmethoden in Kombination mit Granulationen an.

Die Schmelze kann beispielsweise nass oder trocken granuliert und gleichzeitig abgekühlt werden. Bei einer nassen Abkühlung beziehungsweise Granulation beträgt die Abkühlgeschwindigkeit ca. 1600°C pro Minute. Demgegenüber liegt eine Abkühlung bei einer Luftgranulation meist unter diesem Wert. Je nach Umgebungsbedingungen, wie Wasser- oder Luftdurchsatz, können Abkühlzeiten im Bereich von zwei Minuten oder weniger wie zum Beispiel einer Minute oder unter einer halben Minute erreicht werden. Bei der Nassgranulation ist zu berücksichtigen, dass, da ein hydraulisches reaktives Material entsteht, dieses Material möglichst schnell nach der Abkühlung wiederum getrocknet werden sollte.

Im Rahmen des Abkühlprozesses mit Luft kann die von der Luft aufgenommene Energie rückgewonnen werden. Hierzu kann die Wärme der durch die Granulation erhitzten Luft beispielsweise zur Dampferzeugung verwendet werden. Dieser Dampf kann dann wiederum eingesetzt werden, um Dampfturbinen anzutreiben, welche mittels Generatoren elektrische Energie erzeugen. Diese Energie kann dann wiederum für das erfindungsgemäße Verfahren oder zu anderen Zwecken verwendet werden. Selbstverständlich ist auch der Einsatz anderer Abkühlverfahren möglich, wenn diese ein ausreichend schnelles Erstarren ermöglichen.

In einer bevorzugten Ausführungsform des erfindungsgemäßen Verfahrens erfolgt das mechanische Abtrennen des elementaren Eisens mittels eines Mahlprozesses und eines Sichtprozesses. Für diesen Verfahrensschritt ist insbesondere ein Verfahren geeignet, wie es in der internationalen Patentanmeldung WO 2011/107124 A1 offenbart ist. Das Eisen wird während des Mahlprozesses freigelegt, nachfolgend auf einem Mahlteller durch die Dichteunterschiede zwischen dem Eisen und der mineralogischen Matrix separiert, anschließend über den Tellerrand ausgeschleust und fakultativ durch nachfolgende Sortier- und Sichtprozesse weiter angereichert. Für die Zerkleinerung und Desagglomeration der erstarrten Schmelze wird eine Wälzmühle bevorzugt des LOESCHE-Typs verwendet.

Außerdem betrifft die Erfindung ein hydraulisches mineralisches Bindemittel, welches eine mineralogische Zusammensetzung von mindestens 40 M.-% Alit ($C_3S$) und einen Kalkstandard von etwa 90 bis 110 aufweist. Bevorzugt ist ein höherer Alit-Anteil von 50 M.-% insbesondere 60 M.-%. Der Belit-Anteil liegt vorzugsweise zwischen 15 M.-% und 25 M.-%. Das hydraulische mineralische Bindemittel kann mittels des erfindungsgemäßen Verfahrens hergestellt werden und wird im Rahmen der Erfindung auch als LDS-Bindemittel bezeichnet.

Das LDS-Bindemittel weist eine mineralogische Zusammensetzung von maximal 30 M.-% Glasphasen auf, bevorzugt weniger als 20 M.-%. Die restlichen prozentualen Anteile liegen im Wesentlichen in kristallinen Phasen vor.

Die Erfindung wird nachfolgend anhand eines schematischen exemplarischen Ausführungsbeispiels unter Bezugnahme auf die Figuren noch näher erläutert. Hierbei zeigt

Fig. 1    ein schematisches Flussdiagramm einer Ausführungsform des erfindungsgemäßen Verfahrens; und

Fig. 2    ein Diagramm zur Wärmeentwicklungsrate des erfindungsgemäßen hydraulischen mineralischen Bindemittels.

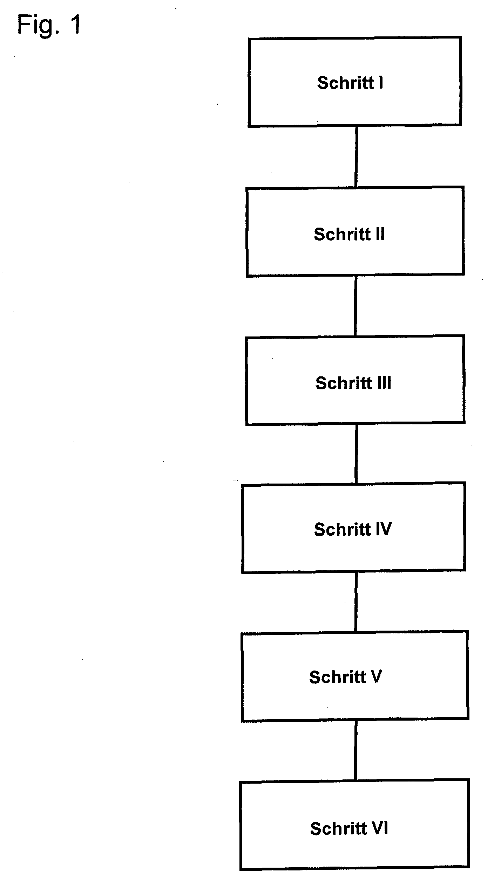

Im Flussdiagramm nach Figur 1 wird im Schritt I ein Aufgabeprodukt bereitgestellt. Dieses weist im Wesentlichen LD-Schlacke auf. Das Aufgabeprodukt hat einen MnO-Gehalt im Bereich zwischen 1 M.-% bis 5 M.-%. Viele LD-Schlacken, die auch als SWS bezeichnet werden, haben bereits einen MnO-Gehalt im gewünschten Bereich. Anderenfalls wird das MnO der Schlacke zugegeben. Es können zu diesem Zeitpunkt oder einem anderem Zeitpunkt auch weitere Korrekturstoffe, beispielsweise $SiO_2$-haltige Stoffe, zugegeben werden, um den später notwendigen Kalkstandard zu erreichen. Bereits in diesem Schritt können dem Aufgabeprodukt Reduktionsmittel zugefügt werden. Hierfür bietet sich z. B. Petrokoks an.

In dem anschließenden Schritt II erfolgt, sofern notwendig, die Verarbeitung des Aufgabeproduktes zur Schmelze. Die Schlacke kann entweder bereits im schmelzflüssigen Zustand aus einem vorgelagerten Prozess erhalten werden oder auch in erkalteter fester Form vorliegen. Ein Aufschmelzen und/oder Erhitzen der Schlacke kann in einem Lichtbogenofen erfolgen. Er kann im Widerstandsbetrieb mit einer feuerfesten Zustellung aus Graphit oder kohlenstoffhaltigem feuerfesten Material betrieben werden. Der Lichtbogenofen kann auch als Schmelzaggregat bezeichnet werden.

Die Schmelze sollte eine Temperatur von etwa zwischen 1.600 °C bis 1.750 °C erreichen, bevor im Schritt III mit der Zugabe von Reduktionsmitten begonnen wird.

Durch die Reduktion der Eisenverbindungen in der Schmelze können Kohlenmonoxid und/oder Kohlendioxid entstehen, welche als Gase aus der Schmelze entweichen. Dies kann zu einem Schäumen der Schmelze führen. Um das Schäumen zu vermindern, kann ein Flussmittel, beispielsweise eine geringe Menge an Borax, der Schmelze zugeführt werden. Hierdurch wird die Viskosität der Schmelze verringert.

Zur Unterdrückung der Re-Oxidation des reduzierten Eisens wird die Ofenatmosphäre mit einem Inertgas, beispielsweise mit Argon, angereichert. Das Argon kann auch direkt in die Schmelze eingeleitet werden. Dann kann ein Teil der Reduktionsmittel auch direkt mit dem Argonstrom in die Schmelze eingeblasen werden. Das durch die Schmelze strömende Argon bewirkt eine Durchwirbelung des Schmelzbades, was sich auf die Metallabscheidung positiv auswirkt.

Sobald im Wesentlichen die gesamten Eisenverbindungen, die im Aufgabeprodukt vorlagen, reduziert wurden, sollte der restliche mineralische Schmelzanteil einen Kalkstandard zwischen 90 und 110 aufweisen. Dies ist bei der Zusammenstellung des Aufgabeproduktes zu beachten. Der gewünschte Kalkstandard kann bei vielen LD-Schlacken erreicht werden.

Im Schmelzaggregat setzt sich der größte Teil des Eisens - ca. 80% bis 90%- als separate Phase am Boden ab. Diese Phase kann noch im flüssigen Zustand abgetrennt werden. Im Schritt IV wird dann die restliche flüssige Schmelze abgezogen und einer Abkühlung unterzogen, so dass sie in weniger als 15 Minuten erstarrt. Diese Abkühlung kann beispielsweise durch eine trockene Granulation mittels Luftabkühlung innerhalb von weniger als zwei Minuten erfolgen.

Da in dem erstarrten Granulat ein Teil der Metallphase, beispielsweise in Tröpfchenform oder in Einschlüssen in dem mineralischen Anteil, verbleibt, wird zur Erhöhung der Metallausbeute eine mechanische Aufbereitung notwendig.

Dieses mechanische Abtrennen von elementarem Eisen geschieht in Stufe V durch einen Mahlprozess mittels einer LOESCHE-Wälzmühle und einer anschließenden Sichtung. Hierbei kann das Eisen aufgrund des Dichteunterschieds zum mineralogischen Anteil abgetrennt werden. Es bietet sich hierbei insbesondere das in der WO 2011/107124 A1 beschriebene Verfahren an.

Der restliche mineralische Anteil ist das erfindungsbemäße LDS-Bindemittel, welches in Stufe VI vorliegt. Es wird als hochwertiges hydraulisches mineralisches Bindemittel verwendet.

In der Tabelle 1 ist die chemische Zusammensetzung eines Aufgabeproduktes, welches eine unbehandelte LD-Schlacke ist, sowie das mittels des erfindungsgemäßen Verfahrens erhaltene LDS-Bindemittel aufgeführt. Hierbei sind die Werte jeweils in M.-% angegeben. Das hier beispielhaft durch Nassgranulation gewonnene LDS-Bindemittel wurde mittels Wasser innerhalb weniger Minuten abgekühlt.

**Tabelle 1:** Chemische Analyse der Ausgansschlacke und des LDS-Bindemittels in M.-%

|  | Ausgangsschlacke (unbehandelt) | LDS-Bindemittel |
|---|---|---|
| $SiO_2$ | 13,9 | 21,8 |
| $Al_2O_3$ | 1,7 | 4,7 |
| $Fe_2O_3$ | 28,8 | 0,6 |
| CaO | 42,7 | 69,6 |
| MgO | 3,3 | 1,1 |
| $TiO_2$ | 0,47 | 1,05 |
| MnO | 5,2 | 0,23 |
| $SO_3$ | 0,2 | 0,81 |
| $P_2O_5$ | 1,07 | 0,04 |

Nach der Tabelle 1 ergibt sich ein Kalkstandard von 70,1 für die Ausgangschlacke und von 104,6 für das LDS-Bindemittel. In der Tabelle 2 ist die kristalline Zusammensetzung der Ausgangsschlacke und des LDS-Bindemittels in M.-% wiedergegeben.

**Tabelle 2:** Wesentliche Phasenzusammensetzung der Ausgangsschlacke und des LDS-Bindemittels nach Rietveld in M.-%

|  | Ausgangsschlacke (unbehandelt) | LDS-Bindemittel |
|---|---|---|
| Alit, $C_3S$ | 5,1 | 56,3 |
| Belit, $C_2S$ | 22,2 | 19,9 |
| XRD-amorph | 38,6 | 21,0 |

Wie der Tabelle 2 entnommen werden kann, ist es mit dem erfindungsgemäßen Verfahren möglich, einen hohen Alit-Anteil von 56,3 M.-% und mindestens 76,2 M.-% kristalliner Phasen im LDS-Bindemittel zu erhalten.

Festzuhalten ist jedoch auch, dass nur ca. 20 M.-% Glasphasen entstehen, obwohl eine ähnliche Abkühlung verwendet wird wie bei der Hüttensandherstellung, welcher normalerweise aus weit über 90 M.-% Glasphasen besteht.

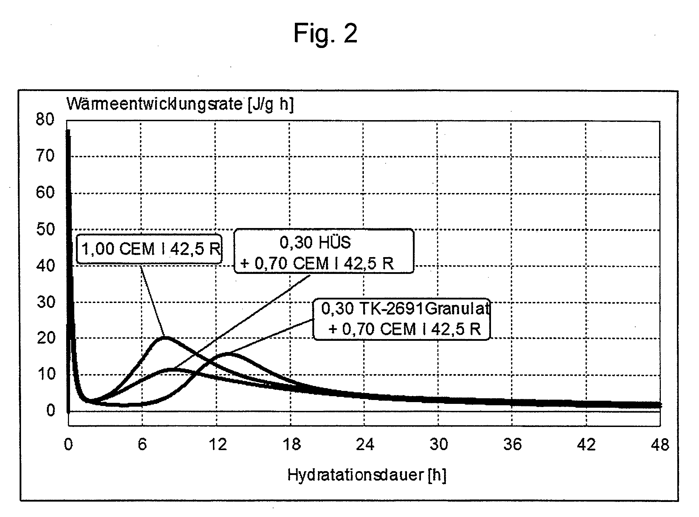

In Fig. 2 ist in einem Diagramm die Wärmeentwicklungrate beim Abbinden während der frühen Hydratation bis 48 h eines Referenzementes (ECM I 42,5 R), einer Mischung von 70% Referenzzement mit 30% LDS-Bindemittel und einer Mischung von 70% Referenzzement mit 30% Hüttensand dargestellt. Das LDS-Bindemittel wird in Figur 2 als Granulat bezeichnet.

Anhand der Wärmeentwicklungsrate kann auf die Reaktivität rückgeschlossen werden. Wie deutlich sichtbar, wird die Reaktivität durch das Beifügen des Hüttensandes deutlich verringert. Demgegenüber verschiebt sich der Zeitpunkt der Wärmeentwicklung und damit der hauptsächlichen Reaktivität bei einer Beimischung des erfindungsgemäßen LDS-Bindemittels im Wesentlichen nur weiter nach hinten.

Hieraus kann geschlossen werden, dass das LDS-Bindemittel selbst eine hohe hydraulische Aktivität vorweist und somit äußert gut als Kompositmaterial für Zement oder als eigenständiges Klinkermaterial geeignet ist.

Zusammenfassend kann festgehalten werden, dass es durch das erfindungsgemäße Verfahren möglich ist, aus Stahlwerksschlacken Eisen rückzugewinnen und ein hydraulisches mineralisches Bindemittel herzustellen, welches ein überraschend gutes Erhärtungsvermögen aufweist.

## Patentansprüche

1. Verfahren zur Aufbereitung von Stahlwerkschlacken zum Herstellen eines hydraulischen mineralischen Bindemittels mit hohem Erhärtungspotential und zum Rückgewinnen von Eisen, mit den Schritten:

   Bereitstellen eines Aufgabeproduktes, welches Stahlwerkschlacke mit Eiseverbindungen, insbesondere in oxydischer Form, und MnO aufweist, wobei das MnO in der Stahlwerkschlacke enthalten sein kann,
   Verarbeiten des Aufgabeproduktes als Schmelze in einem Ofen, Einbringen von Reduktionsmittel in die Schmelze zum Reduzieren der Eisenverbindungen, um im mineralischen Schmelzanteil einen Kalkstandard zwischen 90 und 110 zu erreichen, wobei das Einbringen des Reduktionsmittels in einer nicht-oxidierenden Ofenatmosphäre durchgeführt wird,
   definiertes Abkühlen, wobei die Schmelze in spätestens 15 min erstarrt, mechanisches Abtrennen von zumindest eines Teils des elementaren Eisens aus der erstarrten Schmelze, und
   anschließendes direktes Zuführen der erstarrten Schmelze, welche einen verminderten Eisengehalt und einen Alit-Anteil von mindestens 40 M.-% bei einem Anteil von mindestens 60 M.- % kristalliner Phasen aufweist, wobei die kristallinen Phasen größten Teils aus Alit und Belit bestehen, einer Verwendung als hydraulisches mineralisches Bindemittel.

2. Verfahren nach Anspruch 1,
   **dadurch gekennzeichnet,**
   **dass** das Aufgabeprodukt 0,1 bis 10 M.-% MnO aufweist.

3. Verfahren nach einem der Ansprüche 1 oder 2,
   **dadurch gekennzeichnet,**
   **dass** in dem Aufgabeprodukt bis zu 5 M.-% $Al_2O_3$ und/oder 30-50 M.-% CaO und/oder 10 bis 20 M.-% $SiO_2$ enthalten sind.

4. Verfahren nach einem der Ansprüche 1 bis 3,
   **dadurch gekennzeichnet,**
   **dass** die Schmelze vor und/oder während der Reduktion eine Temperatur von etwa 1450°C bis etwa 1800°C hat.

5. Verfahren nach einem der Ansprüche 1 bis 4,
   **dadurch gekennzeichnet,**
   **dass** die nicht-oxidierende Atmosphäre eine reduzierende Atmosphäre ist.

6. Verfahren nach einem der Ansprüche 1 bis 5,
   **dadurch gekennzeichnet,**
   **dass** als Reduktionsmittel Kohlenstoff, Silizium und/oder andere Metalle oder Halbmetalle verwendet werden.

7. Verfahren nach einem der Ansprüche 1 bis 6,
   **dadurch gekennzeichnet,**
   **dass** zumindest ein Teil des Reduktionsmittels in die Schmelze eingeblasen wird.

**8.** Verfahren nach Anspruch 7,
**dadurch gekennzeichnet,**
**dass** das in die Schmelze eingeblasene Reduktionsmittel mittels eines Schutzgas-Stroms eingeblasen wird.

**9.** Verfahren nach einem der Ansprüche 1 bis 8,
**dadurch gekennzeichnet,**
**dass** in die Schmelze ein Flussmittel eingebracht wird.

**10.** Verfahren nach einem der Ansprüche 1 bis 9,
**dadurch gekennzeichnet,**
**dass** nach dem Reduzieren und vor dem Erstarren der Schmelze flüssiges elementares Eisen abgetrennt wird.

**11.** Verfahren nach einem der Ansprüche 1 bis 10,
**dadurch gekennzeichnet,**
**dass** die Schmelze nach spätestens 3 Minuten, bevorzugt nach spätestens 2 Minuten, erstarrt ist.

**12.** Verfahren nach einem der Ansprüche 1 bis 11,
**dadurch gekennzeichnet,**
**dass** das definierte Abkühlen mittels Einrichtungen zur trockenen oder nassen Granulation durchgeführt wird.

**13.** Verfahren nach einem der Ansprüche 1 bis 12,
**dadurch gekennzeichnet,**
**dass** das definierte Abkühlen mittels aktiver Kühleinrichtungen durchgeführt wird.

**14.** Verfahren nach einem der Ansprüche 1 bis 13,
**dadurch gekennzeichnet,**
**dass** das mechanische Abtrennen des elementaren Eisens mittels eines Mahlprozesses und eines Sichtprozesses erfolgt.

## Claims

**1.** Method for processing steel slag to produce a hydraulic mineral binder with high hardening potential and to recover iron, comprising the steps:

providing a feed product comprising steel slag with iron compounds, in particular in oxide form, and MnO, whereby the MnO may be contained in the steel slag, processing the feed product as melt in a furnace, incorporating reducing agents into the melt to reduce the iron compounds in order to achieve a lime saturation factor in the mineral melt part of between 90 and 110, wherein the incorporation of the reducing agent is carried out in a non-oxidising furnace atmosphere,
defined cooling, wherein the melt solidifies in 15 minutes at the latest,
mechanical separation of at least part of the elemental iron from the solidified melt, and
subsequent direct supply of the solidified melt with a reduced iron content and an alite fraction of at least 40 wt. % with a fraction of crystalline phases of at least 60 wt. %, wherein the crystalline phases comprise for the large part alite and belite, for use as hydraulic mineral binder.

**2.** Method according to claim 1,
**characterised in that**
the feed product comprises 0.1 to 10 wt. % of MnO.

**3.** Method according to one of the claims 1 or 2,
**characterised in that**
up to 5 wt. % of $Al_2O_3$ and / or 30-50 wt. % of CaO and / or 10 to 20 wt. % of $SiO_2$ are contained in the feed product.

**4.** Method according to one of the claims 1 to 3,
**characterised in that**
the melt has a temperature of approximately 1450°C to approximately 1800°C before and / or during the reduction.

**5.** Method according to one of the claims 1 to 4,
   **characterised in that**
   the non-oxidising atmosphere is a reducing atmosphere.

**6.** Method according to one of the claims 1 to 5,
   **characterised in that**
   carbon, silicon and / or other metals or semi-metals are used as reducing agents.

**7.** Method according to one of the claims 1 to 6,
   **characterised in that**
   at least part of the reducing agent is blown into the melt.

**8.** Method according to claim 7,
   **characterised in that**
   the reducing agent blown into the melt is blown in by means of an inert gas flow.

**9.** Method according to one of the claims 1 to 8,
   **characterised in that**
   a flux is incorporated into the melt.

**10.** Method according to one of the claims 1 to 9,
   **characterised in that**
   liquid elemental iron is separated after the reduction and before solidification of the melt.

**11.** Method according to one of the claims 1 to 10,
   **characterised in that**
   the melt has solidified after 3 minutes at the latest, preferably after 2 minutes at the latest.

**12.** Method according to one of the claims 1 to 11,
   **characterised in that**
   the defined cooling is carried out by means of devices for dry or wet granulation.

**13.** Method according to one of the claims 1 to 12,
   **characterised in that**
   the defined cooling is carried out by means of active cooling devices.

**14.** Method according to one of the claims 1 to 13,
   **characterised in that**
   the mechanical separation of the elemental iron takes place by means of a grinding process and a classifying process.

**Revendications**

**1.** Procédé de traitement de laitier d'aciérie pour la fabrication d'un liant minéral hydraulique avec un potentiel de durcissement élevé et pour la récupération de fer, comprenant les étapes :

préparation d'un produit d'alimentation comprenant du laitier d'aciérie avec des composés du fer, en particulier sous forme oxydique, et du MnO, le MnO pouvant être contenu dans le laitier d'aciérie,
traitement du produit d'alimentation en tant que masse fondue dans un four,
apport d'agent réducteur dans la masse fondue pour la réduction du composé du fer pour atteindre, dans la part fondue minérale, un standard de chaux compris entre 90 et 110, tout en réalisant l'apport de l'agent réducteur dans une atmosphère de four non oxydante,
refroidissement défini, la masse fondue se solidifiant au bout de 15 minutes au plus tard,
séparation mécanique d'un moins une partie du fer élémentaire à partir de la masse fondue solidifiée, et
ensuite, soumission directe de la masse fondue solidifiée, laquelle présente une teneur en fer amoindrie et une part d'alite d'au moins 40%m en présence d'une part d'au moins 60%m de phases cristallines, les phases cristallines étant en grande partie composées d'alite et de bélite, à une utilisation en tant que liant minéral hydraulique.

**2.** Procédé selon la revendication 1,
**caractérisé en ce que**
le produit d'alimentation présente 0,1 à 10%m de MnO.

**3.** Procédé selon la revendication 1 ou 2,
**caractérisé en ce que**
dans le produit d'alimentation, jusqu'à 5%m d'$Al_2O_3$ et/ou 30-50%m de CaO et/ou 10 à 20%m de $SiO_2$ sont contenus.

**4.** Procédé selon une des revendications 1 à 3,
**caractérisé en ce que**
la masse fondue avant et/ou après la réduction a une température comprise entre environ 1450°C et environ 1800°C.

**5.** Procédé selon une des revendications 1 à 4,
**caractérisé en ce que**
l'atmosphère non oxydante est une atmosphère réductrice.

**6.** Procédé selon une des revendications 1 à 5,
**caractérisé en ce que**
sont utilisés en tant qu'agent réducteur du carbone, du silicium et/ou d'autres métaux ou semi-métaux.

**7.** Procédé selon une des revendications 1 à 6,
**caractérisé en ce que**
au moins une partie de l'agent réducteur est insufflé dans la masse fondue.

**8.** Procédé selon la revendication 7,
**caractérisé en ce que**
l'agent réducteur insufflé dans la masse fondue est insufflé au moyen d'un flux de gaz protecteur.

**9.** Procédé selon une des revendications 1 à 8,
**caractérisé en ce que**
un agent fluide est apporté dans la masse fondue.

**10.** Procédé selon une des revendications 1 à 9,
**caractérisé en ce que**
après la réduction et avant la solidification de la masse fondue, du fer élémentaire liquide est séparé.

**11.** Procédé selon une des revendications 1 à 10,
**caractérisé en ce que**
la masse fondue s'est solidifiée après 3 minutes au plus tard, de préférence après 2 minutes au plus tard.

**12.** Procédé selon une des revendications 1 à 11,
**caractérisé en ce que**
le refroidissement défini est exécuté au moyen de dispositifs pour la granulation sèche ou humide.

**13.** Procédé selon une des revendications 1 à 12,
**caractérisé en ce que**
le refroidissement défini est exécuté au moyen de dispositifs de refroidissement actifs.

**14.** Procédé selon une des revendications 1 à 13,
**caractérisé en ce que**
la séparation mécanique du fer élémentaire est réalisée au moyen d'un processus de broyage et d'un processus de séparation.

Fig. 1

```
┌─────────────────────┐
│      Schritt I      │
└─────────────────────┘
          │
┌─────────────────────┐
│      Schritt II     │
└─────────────────────┘
          │
┌─────────────────────┐
│     Schritt III     │
└─────────────────────┘
          │
┌─────────────────────┐
│      Schritt IV     │
└─────────────────────┘
          │
┌─────────────────────┐
│      Schritt V      │
└─────────────────────┘
          │
┌─────────────────────┐
│      Schritt VI     │
└─────────────────────┘
```

## Fig. 2

Wärmeentwicklungsrate [J/g h]

1,00 CEM I 42,5 R

0,30 HÜS
+ 0,70 CEM I 42,5 R

0,30 TK-2691 Granulat
+ 0,70 CEM I 42,5 R

Hydratationsdauer [h]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1370501 B1
- EP 1697271 B1
- WO 9624696 A
- GB 1556833 A1
- JP 2011001797 B
- JP 51122670 A
- WO 2011107124 A1